# EUROPEAN PATENT APPLICATION

(11) **EP 4 675 954 A2**
(43) Date of publication of application: **07.01.2026**
(21) Application number: 25215891.0
(22) Date of filing: 10.05.2021
(51) Int. Cl.: H04L 1/1822

(54) **TERMINAL AND RADIO COMMUNICATION METHOD**

(62) Divisional of application: 21941820.9
(71) Applicant: NTT DOCOMO, INC., Tokyo 100-6150 (JP)
(72) Inventor: Yoshioka, Shohei, Tokyo, 100-6150 (JP); Matsumura, Yuki, Tokyo, 100-6150 (JP); Nagata, Satoshi, Tokyo, 100-6150 (JP)
(74) Representative: Hoffmann Eitle

(57) **Abstract**

A terminal receives downlink control information and determines a feedback method for an automatic retransmission request based on information on a priority pertaining to downlink control information in data distribution for a plurality of terminals.

## Description

### [Technical Field]

The present disclosure relates to a terminal and a radio communication method corresponding to a multicast/broadcast service.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

Release 17 of the 3GPP covers simultaneous data transmission (also called broadcasting) services (tentatively called Multicast and Broadcast Services (MBS)) to specified or unspecified multiple terminals (User Equipment, UE) in NR (Non-Patent Literature 1).

For example, in MBS, scheduling and reliability improvement (For example, HARQ (Hybrid Automatic repeat request) feedback to the radio base station (gNB)) of UE groups subject to services is studied.

### [Citation List]

### [Non-Patent Literature]

[Non-Patent Literature 1]
"New Work Item on NR support of Multicast and Broadcast Services," RP-193248, 3GPP TSG RAN Meeting #86, 3GPP, December 2019

### [Summary of Invention]

The MBS HARQ also assumes the application of the ACK/NACK feedback method and the NACK-only feedback method.

However, there is a problem that the UE cannot select the appropriate method, such as how to apply which method, for example, whether to basically fix to one method (semi-fixed) or to dynamically switch between both methods.

Therefore, the following disclosure is made in view of this situation, and the purpose of this disclosure is to provide a terminal and a radio communication method that can appropriately use ACK/NACK feedback and NACK-only feedback.

One aspect of the present disclosure is a terminal (UE200) including a reception unit (control signal and reference signal processing unit 240) that receives downlink control information, and a control unit (control unit 270) that determines a feedback method for an automatic retransmission request based on information on a priority of the downlink control information in data distribution for a plurality of terminals.

One aspect of the present disclosure is a terminal (UE200) including a reception unit (control signal and reference signal processing unit 240) that receives downlink control information, and a control unit (control unit 270) that determines a feedback method for an automatic retransmission request based on information on an uplink control channel associated with the downlink control information in data distribution for a plurality of terminals.

One aspect of the present disclosure is a terminal (UE200) including a reception unit (control signal and reference signal processing unit 240) that receives downlink control information, and a control unit (control unit 270) that determines a feedback method for an automatic retransmission request based on a format of the downlink control information, configuration related to reception of the downlink control information, or process of the automatic retransmission request in data distribution for a plurality of terminals.

An aspect of the present disclosure is a terminal (UE200) including a transmission unit (data transmission and reception unit 260) that transmits feedback of automatic retransmission request, and a control unit (control unit 270) that, when a different method is applied to feedback of an automatic retransmission request in multiple data distributions for multiple terminals, does not assume multiplexing of information on feedback of the different method.

An aspect of the present disclosure is a radio communication method including the steps of receiving downlink control information, and determining a feedback method for an automatic retransmission request based on information on a priority of the downlink control information in data distribution for a plurality of terminals.

An aspect of the present disclosure is a radio communication method including the steps of receiving downlink control information, and determining a feedback method for an automatic retransmission request based on information on an uplink control channel associated with the downlink control information in data distribution for a plurality of terminals.

### [Brief Description of Drawings]

[FIG. 1] FIG. 1 is an overall schematic diagram of a radio communication system 10.
[FIG. 2] FIG. 2 is a diagram showing a configuration example of a radio frame, a sub-frame and a slot used in the radio communication system 10.
[FIG. 3] FIG. 3 is a diagram showing a configuration example of the PTM transmission system 1 and the PTM transmission system 2.
[FIG. 4] FIG. 4 is a functional block diagram of the gNB100 and the UE200.
[FIG. 5] FIG. 5 is a diagram showing an example sequence of PDCCH, PDSCH and HARQ feedback in MBS.
[FIG. 6] FIG. 6 is a diagram showing an example of correspondence between the priority indicator and the HARQ feedback in the operation example 1-1 and the operation example 1-2.
[FIG. 7] FIG. 7 is a diagram showing an example of the DCI field (item) according to the operation example 2-0.
[FIG. 8] FIG. 8 is a diagram showing an example of a condition under which HARQ feedback of different types is allowed to be multiplexed according to operation example 4-2.
[FIG. 9] FIG. 9 is a diagram showing an example of a hardware configuration of the gNB100 and the UE200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1) Overall schematic configuration of the radio communication system

### (1.1) System configuration example

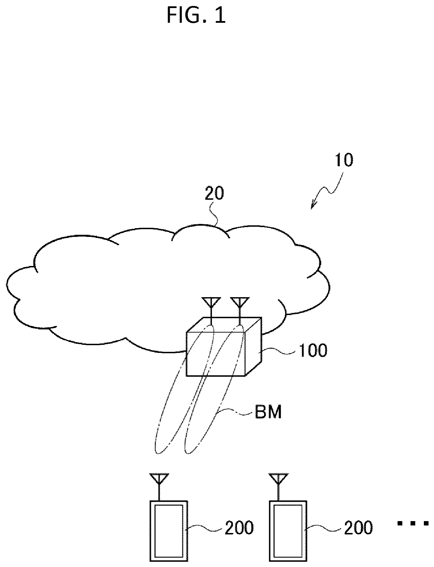

FIG. 1 is an overall schematic configuration diagram of the radio communication system 10 according to the present embodiment. The radio communication system 10 is a radio communication system according to 5G New Radio(NR) and includes the Next Generation-Radio Access Network 20 (hereinafter referred to as the NG-RAN20 and a plurality of terminals 200 (User Equipment 200, UE200).

The radio communication system 10 may be a radio communication system according to a system called Beyond 5G, 5G Evolution or 6G.

The NG-RAN20 includes a radio base station 100 (gNB100). The specific configuration of the radio communication system 10 including the number of gNBs and UEs is not limited to the example shown in FIG. 1.

The NG-RAN20 actually includes a plurality of NG-RAN Nodes, specifically gNBs (or ng-eNBs), connected to a core network (5GC, not shown) according to 5G. Note that the NG-RAN20 and 5 GCs may be simply described as "networks ".

The gNB100 is a radio base station according to the NR, and performs radio communication according to the UE200 and the NR. The gNB100 and the UE200 can support Massive MIMO, which generates a more directional beam BM by controlling radio signals transmitted from a plurality of antenna elements, carrier aggregation (CA), which uses a plurality of component carriers (CCs) bundled together, and dual connectivity (DC), which simultaneously communicates between the UE and each of a plurality of NG-RAN nodes.

The radio communication system 10 supports FR1 and FR2. The frequency band of each FR (Frequency Range) is as follows.
▪FR1:410 MHz~7.125 GHz
▪FR2:24.25 GHz~52.6 GHz

FR1 uses sub-carrier spacing (SCS) of 15, 30 or 60 kHz and may use a bandwidth (BW) of 5~100 MHz. FR2 is higher frequency than FR1 and may use SCS of 60 or 120 kHz (may include 240 kHz) and may use a bandwidth (BW) of 50~400 MHz.

In addition, the radio communication system 10 may support higher frequency bands than those of FR2. Specifically, the radio communication system 10 may support frequency bands greater than 52.6 GHz and up to 114.25 GHz. The radio communication system 10 may also support frequency bands between FR1 and FR2.

Cyclic Prefix-Orthogonal Frequency Division Multiplexing (CP-OFDM)/Discrete Fourier Transform-Spread (DFT-S-OFDM) with greater Sub-Carrier Spacing (SCS) may also be applied. Furthermore, DFT-S-OFDM may be applied not only to the uplink (UL) but also to the downlink (DL).

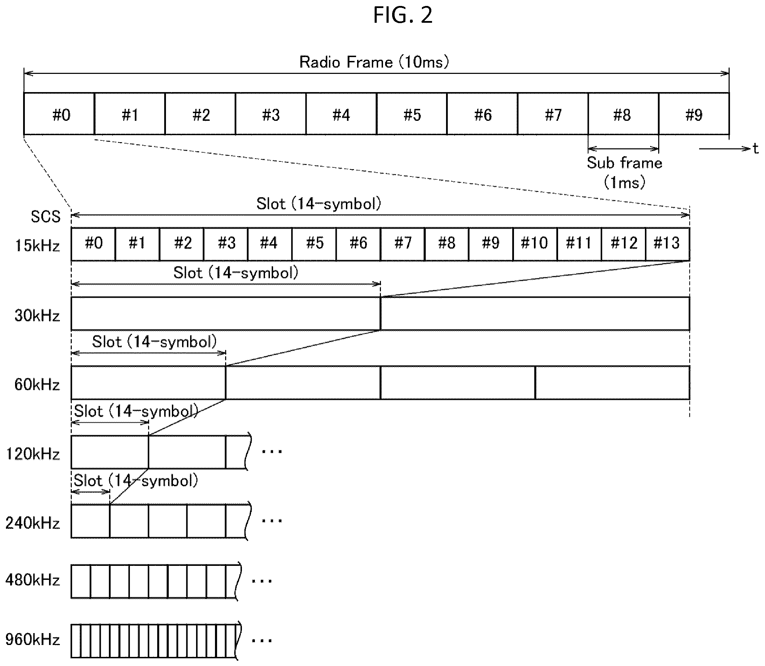

FIG. 2 shows a configuration example of a radio frame, subframe and slot used in the radio communication system 10.

As shown in FIG. 2, one slot is composed of 14 symbols, and the larger (wider) the SCS, the shorter the symbol period (and slot period). Note that the number of symbols constituting one slot may not necessarily be 14 symbols (For example, 28, 56 symbols). The number of slots per subframe may vary depending on the SCS. In addition, the SCS may be wider than 240 kHz (For example, as shown in FIG. 2, 480 kHz, 960 kHz).

Note that the time direction (t) shown in FIG. 2 may be referred to as a time domain, symbol period, symbol time, etc. The frequency direction may be referred to as a frequency domain, resource block, resource block group, subcarrier, BWP (Bandwidth part), subchannel, common frequency resource, etc.

### (1.2) Provision of MBS

The radio communication system 10 may provide Multicast and Broadcast Services (MBS).

For example, in a stadium or hall, a large number of UE200 s may be located in a certain geographic area and a large number of UE200s may simultaneously receive the same data. In such a case, the use of MBS rather than unicast is effective.

Unicast may be interpreted as communication performed one-to-one with the network by specifying a specific UE200 (UE200 specific identification information may be specified).

Multicast may be interpreted as communication performed one-to-many (many specified) with the network by specifying a specific plurality of UE200 (multicast identification information may be specified). As a result, the number of UE200 that receive the received multicast data may be 1.

The broadcast may be interpreted as a communication between all UE200 and the network in an unspecified number. The multicast/broadcast data may have the same copied content, but some content, such as headers, may be different. The multicast/broadcast data may also be transmitted (distributed) simultaneously, but does not necessarily require strict concurrency and may include propagation delays and/or processing delays within the RAN node.

The target UE200 may be in an idle state (RRC idle), a connected state (RRC connected), or any other state (For example, the inactive state) in the radio resource control layer (RRC). The inactive state may be interpreted as a state in which some configurations of the RRC are maintained.

MBS assumes the following three methods for scheduling multicast/broadcast PDSCH (Physical Downlink Shared Channel, also known as MBS PDSCH), specifically scheduling MBS packets (which may be read as data). RRC connected UE may be read as RRC idle UE or RRC inactive UE.

PTM transmission method 1 (PTM-1): Schedule group-common PDSCH using group-common PDCCH(Physical Downlink Control Channel) for the MBS group of the RRC connected UE.

Scramble the CRC and PDSCH of the PDCCH using group-common RNTI (Radio Network Temporary Identifier, may be referred to as G-RNTI).

PTM Transmission Method 2 (PTM-2): Schedule a group-common PDSCH using a terminal-specific PDCCH for the MBS group of the RRC connected UE.

The CRC of the PDCCH is scrambled by the UE-specific RNTI.

The PDSCH is scrambled by the group-common RNTI.

PTP transmission method: Schedule UE-specific PDSCH using UE-specific PDCCH for RRC connected UE.

Scramble CRC of PDCCH and PDSCH by UE-specific RNTI. In other words, it may mean that MBS packets are transmitted by unicast.

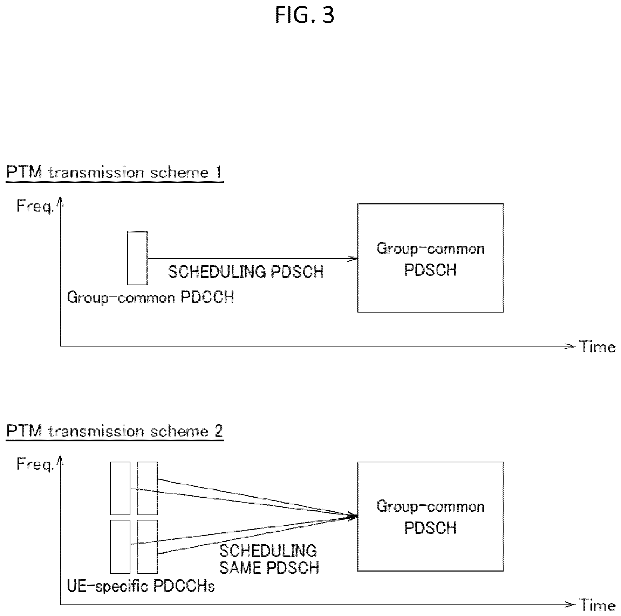

FIG. 3 shows a configuration example of PTM transmission method 1 and PTM transmission method 2. The UE-specific PDCCH/PDSCH may be identified by the target UE, but may not be identified by other UEs in the same MBS group. The group-common PDCCH/PDSCH is transmitted at the same time/frequency resource and can be identified by all UEs in the same MBS group. The names of the PTM transmission methods 1 and 2 are tentative and may be called by different names as long as the operations described above are performed.

In point-to-point (PTP) distribution, the RAN node may wirelessly distribute individual copies of the MBS data packets to individual UEs. In point-to-multipoint (PTM) distribution, the RAN node may wirelessly distribute a single copy of the MBS data packets to a set of UEs.

In order to improve the reliability of MBS, the following two feedback methods are envisaged for HARQ (Hybrid Automatic repeat request) feedback, specifically HARQ feedback for multicast/broadcast PDSCH.
Option 1: Feedback of both ACK and NACK (ACK/NACK feedback)
   ▪A UE that has successfully received or decrypted a PDSCH transmits an ACK
   ▪A UE that has failed to receive or decrypt a PDSCH transmits a NACK
   ▪PUCCH (Physical Uplink Control Channel) resource configurations: PUCCH-Config can be configured for multicast
   ▪PUCCH resources: Shared/orthogonal between UEs depends on the network configurations
   ▪HARQ-ACK CB (codebook): supports type-1 and type-2 (CB decision algorithm specified in 3GPP TS 38.213)
   ▪Multiplexing: can apply unicast or multicast
▪Option 2: NACK-only feedback
   ▪A UE that successfully receives or decrypts PDSCH does not transmit an ACK (does not transmit a response)
   ▪A UE that fails to receive or decrypt PDSCH transmits a NACK
   ▪In a given UE, PUCCH resource configurations can be configured separately by unicast or group cast (multicast)
   Note that ACK may be called positive acknowledgement and NACK may be called negative acknowledgement. HARQ may be called automatic retransmission request.

Enable/disable Option 1 or Option 2 may be either:
▪RRC and Downlink Control Information (DCI)
▪RRC only

In addition, the following is expected for semi-persistent scheduling (SPS) for multicast/broadcast PDSCH:
▪Uses SPS group-common PDSCH (may be called group common SPS PDSCH)
▪Multiple SPS group-common PDSCH can be configured for UE capability
▪HARQ feedback for SPS group-common PDSCH is possible
▪At least activation/deactivation via group-common PDCCH (downlink control channel) is possible

Note that deactivation may be replaced with other synonymous terms such as release. For example, activation may be replaced with start, initiation, trigger, etc., and deactivation may be replaced with end, stop, etc.

SPS is scheduling used as a contrast to dynamic scheduling and may be referred to as semi-fixed, semi-persistent, semi-continuous, etc., and may be interpreted as Configured Scheduling (CS).

Scheduling may be interpreted as the process of allocating resources to transmit data. Dynamic scheduling may be interpreted as a mechanism whereby all PDSCH are scheduled by DCI (For example, DCI 1_0, DCI 1_1, or DCI 1_2). SPS may be interpreted as a mechanism whereby PDSCH transmissions are scheduled by higher layer signaling, such as RRC messages.

Multicast SPS PDSCH reception may mean group common SPS PDSCH reception, may be SPS PDSCH received by multiple terminals, or may be SPS PDSCH reception associated with G-RNTI or G-CS-RNTI (That is, RNTI associated with multiple terminals). Multicast may also be read as Broadcast.

For the physical layer, there may be time domain scheduling and frequency domain scheduling categories.

Also, multicast, group cast, broadcast, and MBS may be interchanged. Multicast PDSCH and PDSCH scrambled by group common RNTI may be interchanged.

Further, the terms data and packet may be interchanged and may be interpreted as synonymous with terms such as signal, data unit, etc. Transmission, reception, transmission and delivery may be interchanged.

### (2) Function block configuration of radio communication system

Next, the function block configuration of the radio communication system 10 will be described. Specifically, the function block configuration of the gNB100 and the UE200 will be described.

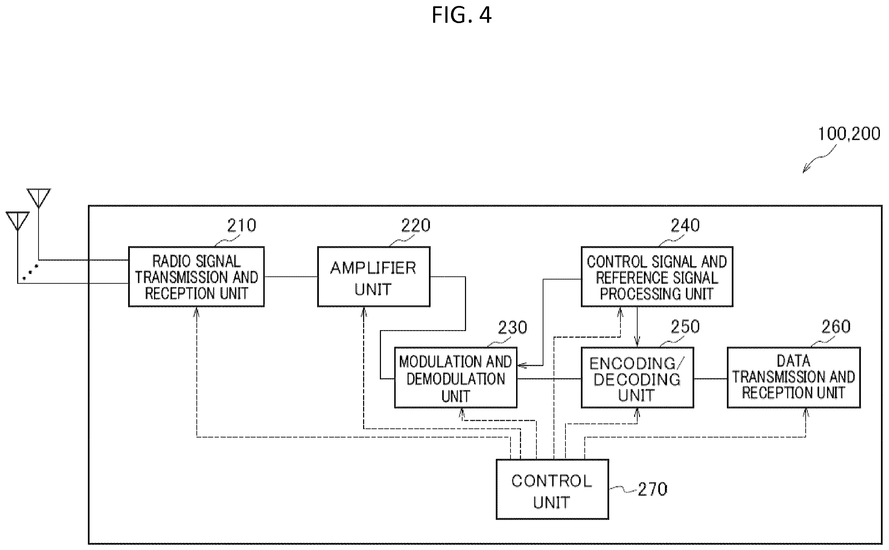

FIG. 4 is a function block configuration diagram of the gNB100 and the UE200. The UE200 will be described below. As shown in FIG. 4, the UE200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

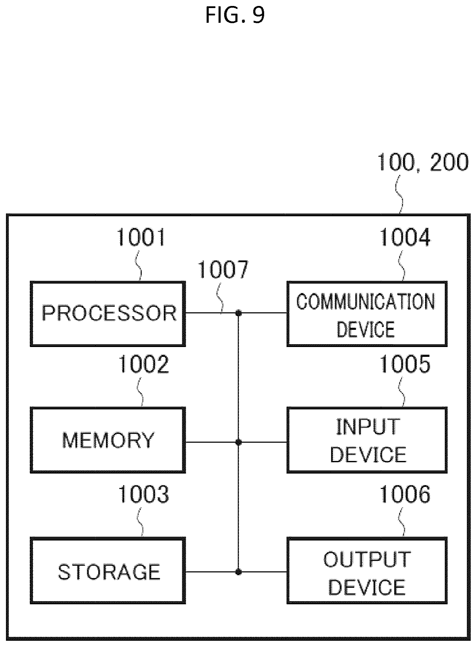

Note that in FIG. 4, only the main functional blocks related to the description of the embodiment are shown, and the UE200 includes other functional blocks (For example, the power supply unit). FIG. 4 also shows the functional block configuration of the UE200 (gNB100), and refer to FIG. 9 for the hardware configuration.

The radio signal transmission and reception unit 210 transmits and receives radio signals in accordance with the NR. The radio signal transmission and reception unit 210 corresponds to a Massive MIMO, a CA using a plurality of CCs bundled together, and a DC that simultaneously communicates between a UE and each of two NG-RAN Nodes.

The radio signal transmission and reception unit 210 corresponds to an MBS, and can receive a downlink channel common to a group of terminals in data distribution for a plurality of UE200.

Also, the radio signal transmission and reception unit 210 can receive a downstream data channel (PDSCH) in MBS, that is, data distribution for a plurality of terminals.

Specifically, the radio signal transmission and reception unit 210 can receive a group-common PDSCH (which may include an SPS group-common PDSCH) that is a downstream data channel (PDSCH) common to a group of terminals.

The radio signal transmission and reception unit 210 can also receive a downstream control channel common to a group of terminals, specifically a group-common PDCCH, and can receive a terminal-specific downstream control channel, specifically a UE-specific PDCCH.

The amplifier unit 220 is configured by a PA (Power Amplifier)/LNA (Low Noise Amplifier) or the like. The amplifier unit 220 amplifies the signal output from the modulation and demodulation unit 230 to a predetermined power level. The amplifier unit 220 amplifies the RF signal output from the radio signal transmission and reception unit 210.

The modulation and demodulation unit 230 performs data modulation/demodulation, transmission power setting, resource block allocation, etc., for each predetermined communication destination (gNB100, etc.). In the modulation and demodulation unit 230, Cyclic Prefix-Orthogonal Frequency Division Multiplexing (CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing related to various control signals transmitted and received by the UE200 and various reference signals transmitted and received by the UE200.

Specifically, the control signal and reference signal processing unit 240 receives various control signals transmitted from the gNB100 via a predetermined control channel, for example, control signals (messages) of the radio resource control layer (RRC). The control signal and reference signal processing unit 240 also transmits various control signals to the gNB100 via a predetermined control channel.

The control signal and reference signal processing unit 240 executes processing using a reference signal (RS) such as a demodulation reference signal (DMRS) and a phase tracking reference signal (PTRS).

The DMRS is a reference signal (pilot signal) known between a base station and a terminal for each terminal to estimate a fading channel used for data demodulation. The PTRS is a reference signal for each terminal to estimate phase noise, which is a problem in a high frequency band.

In addition to the DMRS and the PTRS, the reference signal may include a Channel State Information-Reference Signal (CSI-RS), a Sounding Reference Signal (SRS), and a Positioning Reference Signal (PRS) for position information.

The channel may include a control channel and a data channel. The control channel may include PDCCH, PUCCH (Physical Uplink Control Channel), RACH (Random Access Channel, Downlink Control Information (DCI) with Random Access Radio Network Temporary Identifier (RA-RNTI)), and Physical Broadcast Channel (PBCH).

The data channel may also include PDSCH, and PUSCH (Physical Uplink Shared Channel). Data may mean data transmitted over a data channel.

In this embodiment, the control signal and reference signal processing unit 240 may comprise a reception unit that receives downlink control information (DCI). In addition, the control signal and reference signal processing unit 240 may receive a message in the RRC indicating the activation or inactivation of a function for which the activation or inactivation of HARQ feedback is indicated by DCI.

The encoding/decoding unit 250 performs data partitioning/concatenation and channel coding/decoding for each predetermined communication destination (gNB100 or other gNB).

Specifically, the encoding/decoding unit 250 divides the data output from the data transmission and reception unit 260 into predetermined sizes and performs channel coding for the divided data. The encoding/decoding unit 250 decodes the data output from the modulation and demodulation unit 230 and concatenates the decoded data.

The data transmission and reception unit 260 transmits and receives protocol data units (PDU) and service data units (SDU). Specifically, the data transmission and reception unit 260 performs assembly/disassembly of PDUs/SDUs in a plurality of layers (Media access control layer (MAC), radio link control layer (RLC), packet data convergence protocol layer (PDCP), etc.). The data transmission and reception unit 260 also performs data error correction and retransmission control based on a hybrid automatic repeat request (ARQ). Specifically, the data transmission and reception unit 260 can transmit feedback of an automatic retransmission request (HARQ). In this embodiment, the data transmission and reception unit 260 may constitute a transmission unit.

The control unit 270 controls each function block constituting the UE200. In particular, in the present embodiment, the control unit 270 performs control on the scheduling of the downlink channel with respect to the MBS and the HARQ feedback of the channel.

The control unit 270 performs control corresponding to the scheduling of the downlink data channel common to the terminal group (group common) in the data distribution for the MBS, that is, the plurality of UE 200s. Specifically, the control unit 270 can perform control corresponding to scheduling of group-common PDCCH and group-common PDSCH.

With regard to SPS group-common PDSCH, the control unit 270 may assume that SPS of the downlink data channel (PDSCH) for the terminal group, i.e., activation/deactivation of the semi-fixed scheduling, is applied to the terminal group.

In addition, the control unit 270 may determine a method (scheme) for data distribution for a plurality of terminals, i.e., feedback of the HARQ (automatic retransmission request) in the downlink channel in the MBS. Specifically, the control unit 270 may determine a method for feedback of the HARQ in the PDSCH (Specifically, MBS PDSCH) in the MBS based on a field concerning priority contained in the DCI (downlink control information). The method of HARQ feedback may mean ACK/NACK feedback or NACK-only feedback.

The control unit 270 may apply either ACK/NACK feedback or NACK-only feedback to the MBS PDSCH based on the content of Priority information (which may be read as a field or a signal) among the fields included in the DCI.

The DCI may not be particularly limited if it is a scheduling DCI, but more specifically, it may be a DCI (or a DCI format) for scheduling the MBS PDSCH, and it may be a field included in the DCI that indicates priority with respect to the HARQ. For example, the field may be called a Priority indicator field, or it may be another field related to a Priority indication. Alternatively, it may be predetermined information related to the DCI, rather than a field in the DCI.

The control unit 270 may select ACK/NACK feedback when the priority is high, and NACK-only feedback when the priority is low. Alternatively, the control unit 270 may assume ACK/NACK feedback or NACK-only feedback for each value of the priority indicator field. If the DCI does not include the priority indicator field, the control unit 270 may assume that ACK/NACK feedback or NACK-only feedback is specified by the DCI or RRC parameter.

In addition, the control unit 270 may determine the feedback method of the HARQ in the downlink channel in the MBS based on information related to the PUCCH (uplink control channel) included in the DCI.

Specifically, the control unit 270 may determine the ACK/NACK feedback or NACK-only feedback corresponding to the MBS PDSCH reception based on the field (signal) related to the slot/resource determination to which the PUCCH is allocated among the fields of the DCI (or DCI format) for scheduling the MBS PDSCH.

The control unit 270 may also determine the feedback method of the HARQ in the downstream channel based on the format of the DCI, the configurations related to the reception of the DCI, or the process of the HARQ in the MBS.

Specifically, the control unit 270 may assume different and distinct DCI formats for the HARQ feedback, i.e., ACK/NACK feedback and NACK-only feedback.

The configurations for receiving the DCI may include, for example, an RNTI (Radio Network Temporary Identifier) that scrambles the DCI's CRC (Cyclic Redundancy Checksum), a control resource set (CORESET) or search space that transmits the DCI, and a PDSCH resource that is notified by the DCI.

CORESET may be interpreted as a set of physical resources (Specifically, a specific area on the DL resource grid) and parameters used to transmit the PDCCH (including the DCI). The configurations for receiving the DCI may include other configurations required to receive the DCI. The HARQ process can typically be a HARQ process number, but other information (For example, redundancy version (RV), codebook (CB) number, etc.) can be used as long as it can directly or indirectly recognize the HARQ process.

If the control unit 270 receives a plurality of TBs and the HARQ feedback method for each of the TBs is different, it may perform an operation for multiplexing the corresponding HARQ-ACK bits and transmit them.

The control unit 270 may not assume that the HARQ-ACK bits of different methods are multiplexed on the same channel. Further, when the control unit 270 receives a plurality of transport blocks (TBs) and the HARQ feedback method for each of the TBs is different, if a predetermined condition is satisfied for the HARQ feedback of different methods, the HARQ-ACK bits of different methods may be multiplexed on the same channel as a predetermined value, and the HARQ feedback may be executed.

Alternatively, when the control unit 270 receives a plurality of TBs and the HARQ feedback method for each of the TBs is different, if a predetermined condition is satisfied for the HARQ feedback of different methods, the HARQ feedback method may be determined based on the information pertaining to the predetermined DCI, and the HARQ-ACK bits corresponding to the plurality of TBs may be multiplexed on the same channel, and the HARQ feedback may be executed.

When the control unit 270 receives a plurality of TBs and the HARQ feedback method for each of the TBs is different, if a predetermined condition is satisfied for the HARQ feedback of different methods, the feedback of one of the methods may be dropped, and only the feedback of the other method may be transmitted.

In addition, the gNB100 can perform the above-mentioned downlink channel scheduling and HARQ control.

### (3) Operation of radio communication system

Next, the operation of the radio communication system 10 will be described. Specifically, the operation related to the scheduling of the downlink channel and the HARQ feedback of the channel related to the MBS will be described.

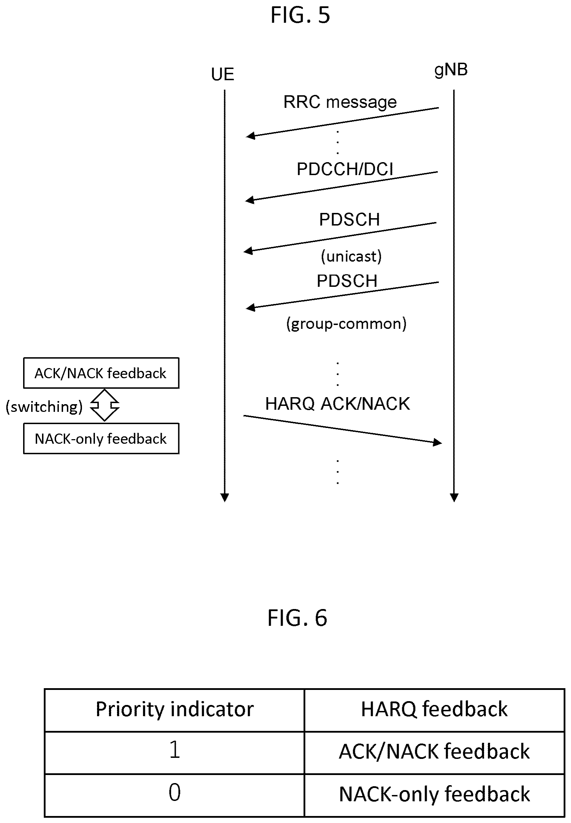

FIG. 5 shows an example sequence of PDCCH, PDSCH and HARQ feedback in the MBS. As shown in FIG. 5, PDCCH (which may include DCI) and PDSCH may be transmitted by unicast or multicast (broadcast). The UE200 may also transmit HARQ feedback (ACK/NACK) for the channel (transport block (TB) received via).

In FIG. 5, it appears that after one PDCCH/DCI, both the unicast PDSCH and the multicast PDSCH are transmitted, but after one PDCCH/DCI, either the unicast PDSCH or the multicast PDSCH may be transmitted. That is, one PDCCH/DCI may schedule either the unicast PDSCH or the multicast PDSCH.

As shown in FIG. 5, the feedback of the HARQ of the MBS also assumes the application of ACK/NACK feedback and NACK-only feedback, and the feedback result of ACK/NACK feedback and the feedback result of NACK-only feedback may be switched accordingly.

When both ACK/NACK feedback and NACK-only feedback are applied in the MBS, a specific determination method is required, such as whether to change both methods to semi-static or dynamic.

In the following, an operation example concerning the determination of ACK/NACK feedback and NACK-only feedback (May include switching, changing, and multiplexing both feedback results) will be described.

### (3.1) Example 1

In this example, among the fields in DCI or DCI format for scheduling MBS PDSCH, HARQ feedback = {ACK/NACK feedback, NACK-only feedback} corresponding to MBS PDSCH reception may be specified (May be read as be decided, be chosen, etc.) based on the signal related to Priority.

Specifically, the UE200 may operate according to the example 1-0~1-6.
▪(Example 1-0): The signal related to Priority may be the priority indicator field in the DCI or another field related to the priority indication.

The Priority indicated by the priority indicator field or another field related to the priority indication may be the Priority of the HARQ feedback or PUCCH (HARQ feedback/PUCCH) corresponding to the scheduled PDSCH.

Based on such Priority, the HARQ feedback = {ACK/NACK feedback, NACK-only feedback} corresponding to the MBS PDSCH reception may be specified by at least one of the following operation examples 1-1~1-4.
▪(Example 1-1): If the priority is high (e.g. priority indicator = 1), the ACK/NACK feedback is used.
▪(Example 1-2): If the priority is low (e.g. priority indicator = 0), the NACK-only feedback is used.

FIG. 6 shows an example of correspondence between the priority indicator and the HARQ feedback for Example 1-1 and Example 1-2. As shown in FIG. 6, when priority indicator = 1, ACK/NACK feedback may be used, and when priority indicator = 0, NACK-only feedback may be used.
▪(Example 1-3): HARQ feedback = {ACK/NACK feedback, NACK-only feedback} is set for each priority indicator value.
▪(Example 1-4): Whether the HARQ feedback method is indicated by DCI is set for each priority indicator value (For at least one of 0,1).

The indication may be given by either of the following:
▪Fields defined for the indication of the HARQ feedback method (For example, one bit)
▪Fields already present in the DCI format scrambled by C (Cell) -RNTI
▪DCI format
▪RNTI to scramble CRC for DCI
▪CORESET/search space to transmit DCI
▪PDSCH resource (time/frequency/code/space) to be notified by DCI
▪PUCCH resource (time/frequency/code/space) to be notified by DCI

▪(Example 1-5): If the priority indicator field is not included in the DCI scheduling the MBS PDSCH, the {ACK/NACK feedback, NACK-only feedback} set by the RRC parameter may be applied

If the {ACK/NACK feedback, NACK-only feedback} is not set by the RRC parameter, the predetermined value, specifically, the default specified method, may be applied (For example, ACK/NACK feedback or NACK-only feedback).
▪(Example 1-6): If the priority indicator field is not included in the DCI scheduling the MBS PDSCH, the {ACK/NACK feedback, NACK-only feedback} may be determined based on the HARQ feedback/PUCCH Priority set by the RRC parameter

If the Priority is not set by the RRC parameter, it may be a predetermined value (For example, ACK/NACK feedback or NACK-only feedback).

According to this operation example, the HARQ feedback method can be appropriately determined according to the Priority.

### (3.1') Example 1'

In this operation example, the {ACK/NACK feedback, NACK-only feedback} may be determined based on the priority set by the RRC parameter or the predefined HARQ feedback/PUCCH.

Specifically, the UE200 may operate according to operation examples 1'-1 and 1'-2.
▪(Example 1'-1): Priority may be set for each predetermined parameter

For example, Priority may be set for each CORESET index, CORESET pool index, and SS (Synchronization Signal) index.
▪(Example 1'-2): Priority may be defined to be determined based on a predetermined rule.

In this case, Priority does not have to be explicitly set. For example, it can be a rule based on CORESET index, CORESET pool index, or SS index. Specifically, it can be a CORESET index for Multicast or a CORESET index for Unicast. Alternatively, it can be both indices.

It can also be the CORESET pool index for Multicast or the CORESET pool index for Unicast. Or it can be both indices.

If the aforementioned Priority is not set by the RRC parameter, the default specified method may be used (For example, ACK/NACK feedback or NACK-only feedback). The Priority may be the Priority of Layer 1 (L1) or the Priority (logical channel priority) of Layer 2 (L2).

### (3.2) Example 2

In this example, among the fields in DCI or DCI format for scheduling MBS PDSCH, HARQ feedback = {ACK/NACK feedback, NACK-only feedback} corresponding to MBS PDSCH reception may be specified based on the signal pertaining to PUCCH slot/resource determination.

Specifically, the UE200 may operate according to the example 2-0~2-2.
▪(Example 2-0): The signal for the PUCCH slot/resource determination may be at least one of the specific fields of the DCI or another field for the indication of the PUCCH slot/resource determination

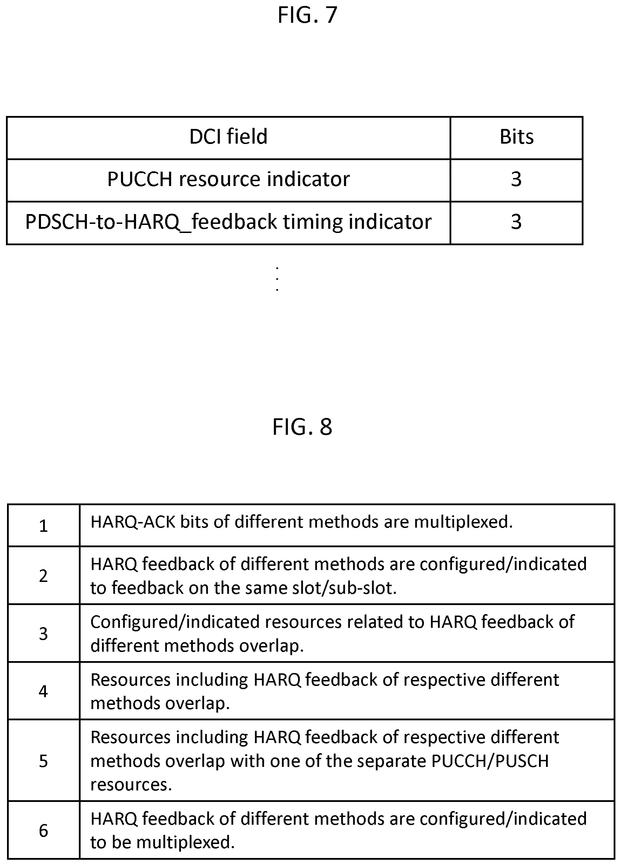

FIG. 7 shows an example of the DCI field (item) according to the operation example 2-0. As shown in FIG. 7, the UE200 may determine the method of HARQ feedback corresponding to MBS PDSCH reception based on the contents of at least one of the fields of the PUCCH resource indicator or the PDSCH-to-HARQ_feedback timing indicator.

The PUCCH resource indicator and the PDSCH-to-HARQ_feedback timing indicator are specified in 3GPP TS38.213.
▪(Example 2-1): If the slot to which the PUCCH is allocated is a predetermined slot (or has a slot offset), the predetermined value (For example, ACK/NACK feedback or NACK-only feedback) may be used

The predetermined slot may be set in advance or may be set each time by DCI, RRC, or the like.
▪(Example 2-2): When the resource to which PUCCH is allocated is a predetermined resource, the predetermined value (For example, ACK/NACK feedback or NACK-only feedback) may be used

The predetermined resource may be set in advance or may be set each time by DCI or RRC.

A predetermined value may also be associated with a PUCCH resource, a PUCCH resource set, or a PUCCH format (PF), and the associated predetermined value may be applied by specifying the PUCCH resource (By DCI, RRC parameter or CCE (Control Channel Element) index) or by determining the PUCCH resource set.

According to this operation example, the HARQ feedback method can be flexibly switched according to a situation.

### (3.3) Example 3

In this operation example, among signals or information pertaining to DCI reception for scheduling MBS PDSCH, HARQ feedback = {ACK/NACK feedback, NACK-only feedback} corresponding to MBS PDSCH reception may be specified based on at least one of DCI format, DCI reception configuration, or HARQ process.

Specifically, the UE200 may operate according to operation examples 3-1~3-5.
▪(Example 3-1): DCI format

ACK/NACK feedback and NACK-only feedback may be specified in different DCI formats. In other words, ACK/NACK feedback and NACK-only feedback may be specified in different DCI formats. In this case, the DCI format used may not be particularly limited, but DCI 1_0, DCI 1_1 or DCI 1_2, or a new DCI format may be used.

The UE200 may perform ACK/NACK feedback for MBS PDSCH scheduled by a predetermined DCI format, and NACK-only feedback for MBS PDSCH scheduled by a DCI format other than the predetermined format.

Alternatively, the above formats may be distinguished by payload size, or by format indicator.
▪(Example 3-2): RNTI for scrambling CRC of DCI

As a group-common RNTI, G1-RNTI is defined and may be used to schedule group-common PDSCH with ACK/NACK feedback. As a group-common RNTI, G2-RNTI is defined and may be used to schedule group-common PDSCH with NACK-only feedback.
▪(Example 3-3): CORESET/search space to transmit DCI
▪(Example 3-4): PDSCH resource (time/frequency/code/space) to be notified by DCI
▪(Example 3-5): HARQ process number

Correspondence with the HARQ feedback method in each of the above operation examples may be defined in advance or set by a parameter of a higher layer such as RRC.

Although it is assumed that the appropriate HARQ feedback method depends on the reliability requirement for traffic, according to this operation example, it is possible to select the HARQ feedback method based on parameters that may differ for each traffic.

### (3.4) Example 4

In this example, the HARQ-ACK bits (feedback results) of the two HARQ feedback systems (ACK/NACK feedback, NACK-only feedback) corresponding to the MBS PDSCH reception may be multiplexed.

Specifically, the UE200 may operate in accordance with Examples 4-1~4-5.
▪(Example 4-1): It is not necessary to assume that HARQ-ACK bits of different schemes are multiplexed on the same channel

For example, the UE200 may not assume a configuration/instruction to perform feedback on HARQ-ACK bits of different schemes in the same slot (or subslot). In addition, the UE200 may not assume that the configured/indicated feedback resources for HARQ-ACK bits of different schemes overlap.
▪(Example 4-2): When multiple TBs are received and the methods of HARQ feedback for each of the TBs are different (For example, some of the TBs have ACK/NACK feedback and the others have NACK-only feedback.), the HARQ-ACK bits of different schemes may be multiplexed on the same channel as a predetermined value and HARQ feedback may be performed if certain conditions for HARQ feedback of different schemes are met

That is, if the predetermined value indicates ACK/NACK feedback, all the bits to be multiplexed may be generated as ACK/NACK feedback. Note that the predetermined value here may be ACK/NACK feedback or NACK-only feedback. The PUCCH resource/resource set may also be determined by parameters associated with the predetermined value.

"If certain conditions for different types of HARQ feedback are met" may be defined in terms of the resources for the feedback.

FIG. 8 shows an example of a condition under which multiple types of HARQ feedback of different types are allowed according to operation example 4-2.

"When a specific condition for HARQ feedback of different types is satisfied" may mean that at least one of the 1~6 conditions shown in FIG. 8 is satisfied. However, it may be based on a combination of conditions.
▪(Example 4-3): When a plurality of TBs are received and the HARQ feedback method for each of the TBs is different (For example, some of the TBs have ACK/NACK feedback and the others have NACK-only feedback.), if the predetermined conditions for the HARQ feedback of the different methods are satisfied, the HARQ feedback method may be determined based on the information pertaining to the predetermined DCI, and the HARQ-ACK bits corresponding to the plurality of TBs may be multiplexed and transmitted on the same channel

That is, if the HARQ feedback method pertaining to the predetermined DCI is ACK/NACK feedback, all the multiplexed bits may be generated as ACK/NACK feedback.

The predetermined DCI may be the last DCI in the time and frequency domains among the DCIs corresponding to the multiplexed bits. The last DCI may mean the last DCI format defined in 3GPP TS38.213 and the like. For example, the DCI may be defined by the following and may have different parameter names:
a last DCI format among the DCI formats that have a value of a PDSCH-to-HARQ_feedback timing indicator field, if present, or a value of dl- DataToUL-ACK, or dl-DataToUL-ACK-r16, or dl-DataToUL-ACKForDCIFormat1_2, indicating a same slot for the PUCCH transmission, that the UE detects and for which the UE transmits corresponding HARQ-ACK information in the PUCCH where, for PUCCH resource determination, detected DCI formats are first indexed in an ascending order across serving cells indexes for a same PDCCH monitoring occasion and are then indexed in an ascending order across PDCCH monitoring occasion indexes.

The PUCCH resource/resource set may also be determined by the parameters associated with the HARQ feedback scheme for a given DCI.
▪(Example 4-4): If multiple TBs are received and the method of HARQ feedback for each of the TBs is different (For example, some of the TBs have ACK/NACK feedback and the others have NACK-only feedback.), the feedback of one of the methods may be dropped and only the feedback of the other may be sent if certain conditions are met for the different methods of HARQ feedback

For example, the bit pertaining to NACK-only feedback may be dropped. Alternatively, the bit pertaining to ACK/NACK feedback may be dropped.
▪(Example 4-5): At least two of Examples 4-1~4-4 may be switched in a predetermined manner.

For example, they may be switched by a configuration with an RRC parameter, or by an instruction with a DCI or MAC-CE (Control Element).

According to this operation example, when the bits of both feedback methods are multiplexed, the network can continue to meet the expected HARQ operation quality. On the other hand, when the bits of both feedback methods are not multiplexed, complex processing in UE200 can be avoided, which can contribute to load reduction.

This operation example may be applied in combination with other operation examples described above. In this case, for example, in operation example 1~3, the operation when multiplexing and/or preferential processing of PUCCH resources pertaining to different HARQ feedback schemes is required becomes clear, and the UE200 may appropriately perform HARQ feedback.

### (4) Operational effects

According to the above-described embodiment, the following operation effects can be obtained. Specifically, the UE200 can determine the method of feedback of the HARQ in the MBS PDSCH based on the priority fields included in the DCI in the MBS. The UE200 may also determine the method of feedback of the HARQ in the downstream channel based on the fields related to the PUCCH (uplink control channel) included in the DCI in the MBS.

The UE200 may also determine the method of feedback of the HARQ in the downstream channel based on the format of the DCI, the configurations related to the reception of the DCI, or the process of the HARQ in the MBS. In addition, the UE200 can assume that a different method is applied to the feedback of the HARQ in the downlink channel and multiplies the results of the feedback if certain conditions are satisfied in the MBS.

Therefore, even if both the ACK/NACK feedback and the NACK-only feedback are applied in the MBS, the UE200 can appropriately use the ACK/NACK feedback and the NACK-only feedback.

### (5) Other Embodiments

Although the embodiments have been described above, they are not limited to the description of the embodiments, and it is obvious to those skilled in the art that various modifications and improvements can be made.

For example, in the embodiments described above, the names PDCCH and PDSCH were used as the downlink channels, but the downlink control channels or downlink data channels (which may be shared channels) may be called by different names.

In the descriptions described above, setting (configure), activating (activate), updating (update), indicating (indicate), enabling (enable), specifying (specify), and selecting (select) may be replaced with each other. Similarly, link, associate, correspond, and map may be interchanged, and allocate, assign, monitor, and map may be interchanged.

In addition, specific, dedicated, UE-specific, and UE-specific may be interchanged. Similarly, common, shared, group-common, UE-common, and UE-shared may be interchanged.

Further, the block configuration diagram (FIG. 4) used in the description of the above embodiment shows blocks of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions transmission is called a transmission unit (transmitting unit) or a transmitter. As described above, the method of realization of both is not particularly limited.

In addition, the gNB100 and UE200 described above may function as computers for processing the radio communication method of the present disclosure. FIG. 9 is a diagram showing an example of a hardware configuration of the device. As shown in FIG. 9, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see FIG. 4) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

Processor 1001, for example, operates an operating system to control the entire computer. Processor 1001 may be configured with a central processing unit (CPU), including interfaces to peripheral devices, controls, computing devices, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store a program (program code), a software module, or the like capable of executing a method according to an embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

In addition, the device may be configured to include hardware such as a microprocessor, a digital signal processor (DSP), an application specific integrated circuit (ASIC), a programmable logic device (PLD), a field programmable gate array (FPGA), or the like, which may provide some or all of each functional block. For example, the processor 1001 may be implemented by using at least one of these hardware.

Information notification is not limited to the aspects/embodiments described in the present disclosure and may be performed using other methods. For example, information notification may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals, or a combination thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc. of the embodiments/embodiments described in the present disclosure may be rearranged as long as there is no conflict. For example, the method described in the present disclosure presents the elements of the various steps using an exemplary sequence and is not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the embodiments/embodiments described in the present disclosure may be used alone, in combination, or alternatively with execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, up channels, down channels, etc. may be replaced with side channels (or side links).

Similarly, mobile stations in the present disclosure may be replaced with base stations. In this case, the base station may have the function of the mobile station. A radio frame may be composed of one or more frames in the time domain. Each frame or frames in the time domain may be referred to as a subframe. A subframe may be further configured by one or more slots in the time domain. Subframes may be of a fixed time length (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in time units greater than a minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframe and the TTI may be a subframe (1 ms) in the existing LTE, a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When the TTI is given, the time interval (For example, the number of symbols) in which the transport block lock, code word, etc. are actually mapped may be shorter than the TTI.

When one slot or one minislot is called TTI, one or more TTIs (that is, one or more slots or one or more minislots) may be the minimum scheduling unit. The number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgment" and "decision" may include regarding some action as "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.
Further preferred embodiments of the present invention are E1 to E6 as follows:
E1. A terminal comprising:
   a reception unit that receives downlink control information; and
   a control unit that determines a feedback method for an automatic retransmission request based on information on a priority of the downlink control information in data distribution for a plurality of terminals.
E2. A terminal comprising:
   a reception unit that receives downlink control information; and
   a control unit that determines a feedback method for an automatic retransmission request based on information on an uplink control channel associated with the downlink control information in data distribution for a plurality of terminals.
E3. A terminal comprising:
   a reception unit that receives downlink control information; and
   a control unit that determines a feedback method for an automatic retransmission request based on a format of the downlink control information, configuration related to reception of the downlink control information, or process of the automatic retransmission request in data distribution for a plurality of terminals.
E4. A terminal comprising:
   a transmission unit that transmits feedback of automatic retransmission request; and
   a control unit that, when a different method is applied to feedback of an automatic retransmission request in multiple data distributions for multiple terminals, does not assume multiplexing of information on feedback of the different method.
E5. A radio communication method comprising the steps of:
   receiving downlink control information; and
   determining a feedback method for an automatic retransmission request based on information on a priority of the downlink control information in data distribution for a plurality of terminals.
E6. A radio communication method comprising the steps of:
   receiving downlink control information; and
   determining a feedback method for an automatic retransmission request based on information on an uplink control channel associated with the downlink control information in data distribution for a plurality of terminals.

### [Explanation of Reference Numerals]

- 10: radio communication system
- 20: NG-RAN
- 100: gNB
- 200: UE
- 210: radio signal transmission and reception unit
- 220: amplifier unit
- 230: modulation and demodulation unit
- 240: control signal and reference signal processing unit
- 250: encoding/decoding unit
- 260: data transmission and reception unit
- 270: control unit
- 1001: processor
- 1002: memory
- 1003: storage
- 1004: communication device
- 1005: input device
- 1006: Output device
- 1007: Bus

## Claims

1. A terminal (200) comprising:
a reception unit (210) configured to receive downlink control information for scheduling reception of first data, and downlink control information for scheduling reception of second data, in data distribution for multiple terminals (200);
a control unit (270) configured to apply a first HARQ feedback method to first HARQ feedback for the first data, and configured to apply a second HARQ feedback method different from the first HARQ feedback method to second HARQ feedback for the second data; and
a transmission unit (210) configured to multiplex, when the first HARQ feedback and the second HARQ feedback overlap, a bit of the first HARQ feedback and a bit of the second HARQ feedback on the same channel using the first HARQ feedback method, and configured to transmit HARQ feedback.

2. The terminal (200) according to claim 1, wherein
the control unit (270) is configured to apply a feedback method for transmitting both a positive acknowledgement and a negative acknowledgement as the first HARQ feedback method and is configured to apply a feedback method for transmitting only a negative acknowledgement as the second HARQ feedback method.

3. The terminal (200) according to claim 1, wherein
the control unit (270) is configured to apply the first HARQ feedback method for transmitting both a positive acknowledgement and a negative acknowledgement, to the first HARQ feedback for the first data scheduled with downlink control information using a first group common RNTI, and is configured to apply the second HARQ feedback method for transmitting only a negative acknowledgement, to the second HARQ feedback for the second data scheduled with downlink control information using a second group common RNTI.

4. The terminal (200) according to claim 1, wherein
the transmission unit (210) is configured to transmit the HARQ feedback multiplexed on the same channel, using a resource associated with the first HARQ feedback method, when a feedback method for transmitting both a positive acknowledgement and a negative acknowledgement is applied as the first HARQ feedback method, and a feedback method for transmitting only a negative acknowledgement is applied as the second HARQ feedback method.

5. A radio communication method for a terminal (200) comprising:
a step of receiving downlink control information for scheduling reception of first data, and downlink control information for scheduling reception of second data, in data distribution for multiple terminals (200);
a step of applying a first HARQ feedback method to a first HARQ feedback for the first data, and applying a second HARQ feedback method different from the first HARQ feedback method to a second HARQ feedback for the second data; and
a step of multiplexing, when the first HARQ feedback and the second HARQ feedback overlap, a bit of the first HARQ feedback and a bit of the second HARQ feedback on the same channel using the first HARQ feedback method, and transmits HARQ feedback.

6. A communication system (10) for distributing data to multiple terminals (200), comprising:
a base station (100); and a terminal (200), wherein
the base station (100) includes:
a transmission unit configured to transmit downlink control information for scheduling transmission of first data, and downlink control information for scheduling transmission of second data; and
a reception unit configured to receive first HARQ feedback for the first data, and second HARQ feedback for the second data,
the terminal (200) includes:
a reception unit (210) configured to receive the downlink control information for scheduling the transmission of the first data, and the downlink control information for scheduling the transmission of the second data;
a control unit (270) configured to apply a first HARQ feedback method to the first HARQ feedback for the first data, and configured to apply a second HARQ feedback method different from the first HARQ feedback method to the second HARQ feedback for the second data; and
a transmission unit (210) configured to multiplex, when the first HARQ feedback and the second HARQ feedback overlap, a bit of the first HARQ feedback and a bit of the second HARQ feedback on the same channel using the first HARQ feedback method, and configured to transmit HARQ feedback.
